# EUROPÄISCHE PATENTSCHRIFT

(11) **EP 3 053 904 B1**
(45) Veröffentlichungstag und Bekanntmachung des Hinweises auf die Patenterteilung: **22.07.2020**
(21) Anmeldenummer: 15154091.1
(22) Anmeldetag: 06.02.2015
(51) Int. Cl.: C05F 7/00

(54) **PK Dünger**
PK fertilizer
Engrais PK

(43) Veröffentlichungstag der Anmeldung: 10.08.2016
(73) Patentinhaber: Terion AG, 9470 Buchs (CH)
(72) Erfinder: Steinmüller, Jürgen, 97080 Würzburg (DE); Merkel, Peter, 97318 Kitzingen (DE); Dreismann, Martin, 97228 Rottendorf (DE)
(74) Vertreter: Tegethoff, Sebastian

(56) Entgegenhaltungen:
- EP-A1- 0 302 179
- DE-A1- 2 234 438
- DE-A1- 2 250 610
- DE-A1- 3 839 830
- DE-A1- 19 922 872
- GB-A- 488 858
- JP-A- S60 206 500
- JP-A- 2008 022 724
- KR-B1- 100 983 453
- US-A- 4 191 549

## Beschreibung

### Gebiet der Erfindung

Die vorliegende Erfindung betrifft ein Verfahren zur Herstellung eines organisch-mineralischen bzw. organo-mineralischen PK-Düngers (Phosphor-Kalium-Dünger) mit definiertem Nährstoffgehalt. Die Erfindung betrifft insbesondere ein Verfahren zur Herstellung eines organisch-mineralischen PK-Düngers mit definiertem Nährstoffgehalt.

### Hintergrund der Erfindung

Aus dem Stand der Technik sind Verfahren bekannt, welche Klärschlamm, beispielsweise aus kommunalen Kläranlagen, in Düngemittel umwandeln. Hierzu wird der Klärschlamm vorbehandelt, z.B. hygienisiert und/oder getrocknet, und mit Nährstoffen angereichert, zum Teil wird er direkt als Dünger eingesetzt oder erst nach einer Kompostierung.

Verfahren zur Herstellung von Düngemittel aus Altpapier mit Klärschlamm sind aus DE 38 39 830 A1 und EP 0 302 179 A1 bekannt.

Nachteilig an der Verwendung von Klärschlamm als Dünger ist die Belastung des Bodens mit Schwermetallen und anderen Schadstoffen wie biologisch wirksamen Substanzen bei der Ausbringung des Düngers. Mit der Belastung des Bodens geht in der Regel eine Belastung von Grundwasser und Oberflächenwasser einher. Eine Verringerung der Verwendung von Klärschlamm bedeutet also eine Verringerung der Belastung von Boden, Grundwasser und Oberflächengewässern bei der landwirtschaftlichen Herstellung von Nahrungsmitteln.

### Zusammenfassung der Erfindung

Es wird ein PK-Dünger bereitgestellt, welcher als Bestandteile konditionierten Klärschlamm und Papierfangstoff umfasst, wobei der Dünger als getrocknetes Granulat mit einer Feuchtigkeit von 5 bis 10 Massenprozent vorliegt und der Massenanteil des Papierfangstoffs am PK-Dünger höher ist als der Anteil des Klärschlamms am PK-Dünger und der Anteil des Papierfangstoffs am PK-Dünger 50 bis 60 Massenprozent beträgt und eine Feuchtigkeit von 5 bis 10 Massenprozent aufweist.

In einer Ausführungsform summiert sich der Anteil des Klärschlamms am PK-Dünger mit dem Anteil des Papierfangstoffs am PK-Dünger zu etwa 81 Massenprozent auf, und der Anteil, der dem Klärschlamm und dem Papierfangstoff hinzugefügten Nährstoffe am PK-Dünger beträgt etwa 19 Massenprozent.

Der Klärschlamm und der Papierfangstoff können konditioniert sein.

In einer Ausführungsform sind der Gehalt an Kalium als K₂O in einem Bereich von 0 bis 15 Massenprozent und/oder der Gehalt an Phosphor als P₂O5 in einem Bereich von 2 bis 12 Massenprozent vorbestimmt.

Der pH-Wert des wässrigen Eluates des PK-Düngers kann in einem Bereich von 6 bis 8 vorbestimmt sein.

Es wird ein Verfahren zur Herstellung eines organisch-mineralischen Phosphor-Kalium-Düngemittels aus Klärschlamm und Papierfangstoff bereitgestellt, umfassend das Vermischens des Klärschlamms und des Papierfangstoffes, wobei der Massenanteil des Papierfangstoffs am PK-Dünger höher gewählt wird als der Anteil des Klärschlamms am PK-Dünger und der Anteil des Papierfangstoffs am PK-Dünger auf etwa 50 bis 60 Massenprozent eingestellt wird und eine Feuchtigkeit von 5 bis 10 Massenprozent aufweist, wobei der Dünger zu einem Granulat getrocknet wird mit einer Feuchtigkeit von 5 bis 10 Massenprozent..

Das Verfahren kann ferner zumindest einen der Schritte umfassen:
- Konditionieren des Klärschlamms,
- Konditionieren des Papierfangstoffs.

Das Konditionieren des Klärschlamms kann zumindest einen der folgenden Schritte umfassen:
- ein Zerkleinern des Klärschlamms,
- ein Hinzufügen von Phosphorsäure und/oder Kaliumcarbonat,
- ein Vermischen,
- ein Trocknen,
- ein Mahlen auf eine vorbestimmte Korngröße.

Das Konditionieren des Papierfangstoffs bei Raumtemperatur kann die folgenden Schritte umfassen:
- ein Trocknen,
- ein oxidatives Behandeln,
- ein Hinzufügen von Phosphorsäure,
- ein Vermischen.

Das Vermischen des Klärschlamms und des Papierfangstoffes kann die folgenden Schritte umfassen:
- ein Homogenisieren,
- ein Besprühen mit demineralisiertem Wasser zur Bildung eines Feuchtgranulats,
- ein Trocknen des Feuchtgranulats.

Nach dem Homogenisieren kann Säure hinzugefügt werden.

Die Säure kann aus der Gruppe umfassend Ameisensäure und Phosphorsäure ausgewählt sein.

### Detaillierte Beschreibung der Erfindung

Neuartig ist die Verwendung eines weiteren Abfallstoffes, nämlich von Papierfangstoff (PF), als Zusatz zu dem aktuell schon als Dünger verwendeten kommunalen Klärschlamm (KS). Klärschlamm ist ein bei der Abwasserreinigung anfallender Abfallstoff und enthält neben Wasser organische und mineralische Feststoffe.

Der Papierfangstoff entsteht als zellulosehaltiger Abfallstoff im Rahmen der Papierproduktion bzw. der Aufbereitung von Altpapier, etwa bei Aufbereitung von Abwässern der Papierherstellung. Im Rahmen der Herstellung des PK-Düngers dient der Papierfangstoff als Granuliermittel des Klärschlammes, wodurch der fertige Dünger homogenisiert und damit leicht und feiner dosierbar wird. Der Papierfangstoff ist außerdem ein Lieferant von Nährstoffen und Verbindungen (im Wesentlichen Calciumcarbonat bzw. Kalk), die es zusätzlich ermöglichen, den pH-Wert des wässrigen Eluates des fertigen Düngers auf ein boden- bzw. pflanzenverträgliches Maß einzustellen.

Die Massenanteile der Ausgangsstoffe im vorliegenden konkret beschriebenen Verfahren betrug 59 Massenprozent (*Ma*% oder Masse-%) konditionierter Papierfangstoff, 22 *Ma%* konditionierter Klärschlamm und 19 *Ma%* zugesetzte Reagenzien.

Unter Konditionierung der Ausgangsstoffe ist im Folgenden eine Vorbehandlung bzw. stoffliche Veränderung von Ausgangsstoffen zu verstehen, wie z.B. ein Entwässern, ein Trocknen, ein Zerkleinern, ein Hygienisieren, ein Anreichern mit Nährstoffen wie beispielsweise Kalium oder Phosphor, sowie eine Regulierung des pH-Wertes bei Zutritt von Wasser.

Grundsätzlich kann der Anteil des Papierfangstoffes am PK-Dünger in einem variablen Bereich von 10 bis maximal 80 *Ma%* liegen, woraus sich im Wesentlichen der Anteil des Klärschlamms am PK-Dünger ergibt. In jedem Fall wird dem Gemisch von Klärschlamm und Papierfangstoff dann noch der benötigte Anteil der Reagenzien zugesetzt, die etwa einen Massenanteil von 19 *Ma%* der Trockensubstanz (TS) des granulierten Düngers ausmachen.

Die beiden Abfallstoffe, Papierfangstoff und Klärschlamm, können bei diesem Verfahren direkt in dem Zustand und der Konzentration verwendet werden, wie sie im Rahmen der Abwasseraufbereitung bzw. der Papierherstellung anfallen. Dies hat den Vorteil, dass der Umfang der anfallenden beiden Abfallstoffe reduziert wird, ohne dass diese aufwändig einer Nutzbarmachung in der Herstellung des erfindungsgemäßen PK-Düngers zugänglich gemacht werden müssen.

Sowohl der Papierfangstoff als auch der Klärschlamm werden konditioniert, um Bakterien und Keime abzutöten und beide Ausgangsstoffe biologisch inaktiv zu machen. Dies hat den Vorteil, dass der aus den Ausgangstoffen hergestellte PK-Dünger länger lagerfähig ist.

Durch die Konditionierung wird zwar der als Stickstofflieferant nutzbare Ammoniumgehalt des Klärschlamms deutlich reduziert. Im Hinblick auf die Fischtoxizität des Ammoniumions ist dies aber von Vorteil, da durch Wasser Ammoniumsalze aus dem Boden in Gewässer ausgewaschen werden können.

Der tatsächliche, von Boden und Pflanzenbewuchs abhängende Stickstoffbedarf kann durch die Palette der handelsüblichen Stickstoffdünger besser und unabhängig vom Phosphor- sowie Kaliumgehalt, z.B. in der Form von Ammoniumnitrat bedarfsgerecht auf den Boden ausgebracht werden.

Vorliegend wird zur Einstellung des Phosphorgehaltes Phosphorsäure verwendet, die im Wesentlichen als Phosphorlieferant neben dem Klärschlamm dient, darüber hinaus aber erforderlich ist, um den pH-Wert im Boden zu regulieren.

Zur Konditionierung des Papierfangstoffes werden zusätzlich Oxidationsmittel eingesetzt, wie beispielsweise durch Eisensalze katalysierte bzw. aktivierte Oxidationsmittel (Wasserstoffperoxid, z.B. im Fentons-Reagenz, oder Peroxodisulfat).

Im Falle des Klärschlammes erfolgt die übliche Konditionierung durch Erhitzung oder Behandlung mit Calciumhydroxid oder Calciumoxid. Zusätzlich wird der Klärschlamm im Rahmen der Konditionierung mit Nährstoffen angereichert.

Die Neuerung liegt insbesondere in der gleichzeitigen stofflichen Verwertung der beiden Abfallstoffe Klärschlamm und Papierfangstoff. Die Erfindung dient damit in vorteilhafter Weise der Abfallvermeidung und des Recycling.

Ein weiterer Vorteil der Erfindung liegt darin, die Schwermetallbelastung der Böden durch in kommunalen Klärschlämmen normalerweise enthaltene Schwermetalle, wie z.B. Kupfer und Zink, bei reiner Klärschlammdüngung zu verringern. Bei einer Düngung mit dem erfindungsgemäßen PK-Dünger wird in vorteilhafter Weise durch Verwendung des Papierfangstoffs eine deutlich verringerte Klärschlammmenge in der Herstellung des PK-Düngers pro Masseneinheit verwendet und damit in der Landwirtschaft pro Flächeneinheit aufgebracht, was die Schwermetallbelastung reduziert.

Vorteilhafterweise ermöglicht das Verfahren die genaue Einstellung des Nährstoffgehaltes, insbesondere des Gehaltes an Phosphor und Kalium. Diese Einstellung des Nährstoffgehaltes ist limitiert durch die Gehalte an Phosphor und Kalium der beiden verwendeten Abfallstoffe und der verwendeten Kalium und Phosphor enthaltenden Reagenzien. Der Nährstoffgehalt des fertigen Düngers kann genau auf die Anforderungen des jeweiligen Kunden für den jeweiligen Einsatz eingestellt werden.

### Beispielhafte Herstellung eines erfindungsgemäßen PK-Düngers

Nachfolgend ist die Herstellung eines erfindungsgemäßen PK-Düngers dargestellt. Der erfindungsgemäß hergestellte PK-Dünger ist aufgrund seiner Zusammensetzung und der Pflanzenverfügbarkeit der Nährstoffe - siehe Analyse und Bestätigung- uneingeschränkt als Dünger einsetzbar.

Ausgehend von kommunalem Klärschlamm sollte ein PK-Dünger hergestellt und zu einer nicht staubenden, rieselfähigen Festsubstanz aufbereitet werden. Es wurden für den erfindungsgemäß hergestellten PK-Dünger ein Phosphorgehalt von etwa 10 *Ma*% der Trockensubstanz in Form von "P₂O₅" und ein Kaliumgehalt von etwa 4 *Ma%* der Trockensubstanz in Form von "K₂O" als Zielvorgabe festgesetzt. Bei dem erfindungsgemäß hergestellten PK-Dünger handelt es sich aufgrund der Inhaltsstoffe um ein Düngematerial, das als organisch-mineralischer PK-Dünger klassifiziert werden kann. Zur Darstellung des Zielproduktes, des erfindungsgemäß hergestellten PK-Düngers, wurden zwei Materialien eingesetzt, die aus dem Bereich der Abfalldefinition stammen.

Zum einen handelte es sich im Falles des ersten der beiden Abfallstoffe um kommunalen Klärschlamm aus Patras (Griechenland). Die Darstellung des erfindungsgemäß hergestellten PK-Düngers erfolgte somit im Wesentlichen in drei Schritten. Dieser Klärschlamm wurde in einem ersten Schritt zu einem trockenen, pulverförmigen PK-Dünger oder PK-Düngematerial, im Folgenden als erstes Zwischenprodukt bezeichnet, verarbeitet.

In einem zweiten Schritt wurde der zweite der beiden Abfallstoffe, der Papierfangstoff, chemisch behandelt und teilgetrocknet (konditioniert) zur Erzeugung eines zweiten Zwischenproduktes. Zum Zwecke der Granulierung wurde das erste Zwischenprodukt in einem dritten Schritt mit dem zweiten Zwischenprodukt gemischt und unter Zugabe von Wasser granuliert.

### 1. Schritt Konditionierung des Klärschlammes mit Phosphor und Kalium

### 1.1. Darstellung eines Mischproduktes

458,8g des feuchten, im Querstromzerspaner zerkleinerten Klärschlammes aus Patras (absolute Feuchte: Fₐ(105°C) = 17.1 *Ma*% nach dreimonatiger Lagerung) wurden im Mischer vorgelegt. Unter Rühren wurden dem Klärschlamm 98,1g von 85%-iger, in 41g Reinstwasser gelöster Phosphorsäure (H₃PO₄) hinzugefügt. Anschließend wurden 303,8g Reinstwasser und 88.2g Kaliumcarbonat (K₂CO₃) hinzugegeben. Das hierbei erhaltene zähflüssige, braune Gemenge wurde gemischt zur Herstellung eines Mischproduktes.

Die absolute Feuchte des Mischproduktes betrug: Fₐ(105°C) = 48.0 *Ma*% bei einer Messgenauigkeit (Standardabweichung der absoluten Feuchte) von σ = 0.7 *Ma*%*.*

### 1.2. Aufbereitung des Mischproduktes zum ersten Zwischenprodukt

Zum Zwecke einer verbesserten Lagerfähigkeit (Vermeidung der Schimmelbildung bei längerer Lagerung) wurde das Mischprodukt bis auf eine absolute Feuchte von 5 - 6 *Ma*% getrocknet. Das hierbei erhaltene grobkörnige Trockengut wurde im Hinblick auf eine spätere Weiterverarbeitung in einer Kugelmühle gemahlen und gesiebt (Φ_{Sieb} ≈ 0.5 mm), womit das erste Zwischenprodukt erhalten wurde.

Die absolute Feuchte des ersten Zwischenproduktes betrug: Fₐ(105°C) = 5.45 *Ma*% bei einer Messgenauigkeit (Standardabweichung der absoluten Feuchte) von σ = 0.04 *Ma*%.

Unter Berücksichtigung der Analyseresultate des eingesetzten Klärschlammes aus Patras sollten bei der oben angegebenen Umsetzung die nachstehend aufgeführten Gehalte für Phosphor und Kalium in der Trockensubstanz des ersten Zwischenproduktes erzielt werden:
Gehalt an Phosphor : 7.1 *Ma*% der TS (entspricht 16.3 *Ma*% P in Form von P₂O₅)
Gehalt an Kalium : 10.0 *Ma*% der TS (entspricht 12.1 *Ma*% K in Form von K₂O)

### 1.3. Bestimmung des Gehalts an Phosphor und Kalium im ersten Zwischenprodukt

Unter Verwendung von Königswasser, einem Gemisch aus Salpetersäure und Salzsäure, wurden aus dem ersten Zwischenprodukt Kalium und Phosphor zur Messung der Pflanzenverfügbarkeit extrahiert. Im Königswasserextrakt des ersten Zwischenprodukts wurden mittels ICP-OES (optische Emissionsspektrometrie mittels induktiv gekoppelten Plasmas) die aufgeführten Gehalte für Phosphor und Kalium bestimmt:

| | |
|---|---|
| Gehalt an Phosphor | : 7.43 *Ma*% der TS (Standardabweichung σ = 0.04 *Ma*%) |
| Gehalt an Kalium | : 10.33 *Ma*% der TS (Standardabweichung σ = 0.09 *Ma*%) |

### 2. Schritt Konditionierung des Papierfangstoffes

Der zwecks Erhöhung der Lagerfähigkeit teilgetrocknete Papierfangstoff (absolute Feuchte Fₐ(105°C) = 16.3 *Ma*%, Standardabweichung σ = 0.3 *Ma*%) wurde oxidativ behandelt, um vorhandene Keime abzutöten. Außerdem wurde durch Hinzufügen von Phosphorsäure ein Teil des im Endprodukt, dem erfindungsgemäß hergestellten PK-Dünger, angestrebten Phosphorgehaltes abgedeckt.

Im Mischer wurden zu 1195g des Papierfangstoffes 15.0g Kaliumperoxodisulfat (K₂S₂O₈) und 8.3g Eisen(II)sulfat (FeSO₄) gegeben. Nach Homogenisierung wurden 129.3g 85%iger, in 158.8g demineralisiertem Wasser gelöster Phosphorsäure unter Rühren hinzugegeben. Das Ganze wurde. weiter gemischt und anschließend bei 20 - 25°C gelagert, womit ein konditionierter und angereicherter Papierfangstoff, das zweite Zwischenprodukt, erhalten wurde.

### 3. Schritt Darstellung des PK-Düngers

Im Mischer wurden dem hergestellten zweiten Zwischenprodukt, dem konditionierten und angereicherten Papierfangstoff, 528.8g des ersten Zwischenproduktes, des konditionierten und angereicherten Klärschlamms, hinzugegeben. Das Gemenge wurde im Mischer homogenisiert. Anschließend wurden 129.3g 98%iger, in 505.6g demineralisiertem Wasser gelöster Ameisensäure (HCOOH) hinzugegeben. Daraufhin wurde bei rotierender Mischertrommel demineralisiertes Wasser in kleinen Portionen auf das Gemisch (absolute Anfangsfeuchte: etwa 34*Ma*%) gesprüht, bis ein Feuchtgranulat mit einer gewünschten vorbestimmten Korngrößenverteilung im Bereich von 2 - 10 mm erhalten wurde. Dieser Zustand wurde nach Aufsprühen von insgesamt etwa 488g demineralisierten Wassers erreicht (absolute Feuchte: etwa 44 - 45 *Ma*%).

Die absolute Feuchte des Endproduktes, des erfindungsgemäß hergestellten PK-Düngers, betrug: Fₐ(105°C) = 44.3 *Ma%* bei einer Standardabweichung der absoluten Feuchte von σ = 0.2 *Ma*%.

Zum Zwecke einer mechanischen Stabilisierung der Granulate und der Vermeidung von Schimmelbildung bei Lagerung wurde der erfindungsgemäß hergestellte PK-Dünger im Heißlufttrockner getrocknet. Die absolute Feuchte des mechanisch stabilisierten, erfindungsgemäß hergestellten PK-Düngers betrug:
Fₐ(105°C) = 6.8 *Ma*% (Standardabweichung der absoluten Feuchte σ = 0.4 *Ma*%). Dieser PK-Dünger enthielt 53 Ma% Papierfangstoffanteil.

Der Schritt des Hinzufügens von Säure nach dem Homogenisieren ist optional. Es kann beispielsweise Ameisensäure oder Phosphorsäure verwendet werden.

## Patentansprüche

1. PK-Dünger, welcher als Bestandteile konditionierten Klärschlamm und Papierfangstoff umfasst, wobei der Dünger als getrocknetes Granulat mit einer Feuchtigkeit von 5 bis 10 Massenprozent vorliegt und der Massenanteil des Papierfangstoffs am PK-Dünger höher ist als der Anteil des Klärschlamms am PK-Dünger und der Anteil des Papierfangstoffs am PK-Dünger 50 bis 60 Massenprozent beträgt und eine Feuchtigkeit von 5 bis 10 Massenprozent aufweist.

2. PK-Dünger nach Anspruch 1, wobei der Anteil des Klärschlamms am PK-Dünger mit dem Anteil des Papierfangstoffs am PK-Dünger sich zu etwa 81 Massenprozent aufsummiert, und der Anteil der dem Klärschlamm und dem Papierfangstoff hinzugefügten Nährstoffe am PK-Dünger etwa 19 Massenprozent beträgt.

3. PK-Dünger nach einem der Ansprüche 1 oder 2, wobei der Gehalt an Kalium als K₂O in einem Bereich von 0 bis 15 Massenprozent und/oder der Gehalt an Phosphor als P₂O₅ in einem Bereich von 2 bis 12 Massenprozent vorbestimmt sind.

4. PK-Dünger nach einem der Ansprüche 1 bis 3, wobei der pH-Wert des wässrigen Eluates des PK-Düngers in einem Bereich von 6 bis 8 vorbestimmt ist.

5. Verfahren zur Herstellung eines organisch-mineralischen Phosphor-Kalium-Düngemittels aus Klärschlamm und Papierfangstoff, umfassend das Vermischens des Klärschlamms und des Papierfangstoffes, wobei der Massenanteil des Papierfangstoffs am PK-Dünger höher gewählt wird als der Anteil des Klärschlamms am PK-Dünger und der Anteil des Papierfangstoffs am PK-Dünger auf 50 bis 60 Massenprozent eingestellt wird und eine Feuchtigkeit von 5 bis 10 Massenprozent aufweist, wobei der Dünger zu einem Granulat getrocknet wird mit einer Feuchtigkeit von 5 bis 10 Massenprozent.

6. Verfahren nach Anspruch 5, ferner umfassend zumindest einen der Schritte:
- Konditionieren des Klärschlamms,
- Konditionieren des Papierfangstoffs.

7. Verfahren nach Anspruch 6, wobei das Konditionieren des Klärschlamms zumindest einen der folgenden Schritte umfasst:
- ein Zerkleinern des Klärschlamms,
- ein Hinzufügen von Phosphorsäure und/oder Kaliumcarbonat,
- ein Vermischen,
- ein Trocknen,
- ein Mahlen auf eine vorbestimmte Korngröße.

8. Verfahren nach Anspruch 6 oder 7, wobei das Konditionieren des Papierfangstoffs bei Raumtemperatur die folgenden Schritte umfasst:
- ein Trocknen,
- ein oxidatives Behandeln,
- ein Hinzufügen von Phosphorsäure,
- ein Vermischen.

9. Verfahren nach einem der Ansprüche 6 bis 8, wobei das Vermischen des Klärschlamms und des Papierfangstoffes die folgenden Schritte umfasst:
- ein Homogenisieren,
- ein Besprühen mit demineralisiertem Wasser zur Bildung eines Feuchtgranulats,
- ein Trocknen des Feuchtgranulats.

10. Verfahren nach Anspruch 9, wobei nach dem Homogenisieren Säure hinzugefügt wird.

11. Verfahren nach Anspruch 10, wobei die Säure ausgewählt ist aus der Gruppe umfassend Ameisensäure und Phosphorsäure.

## Claims

1. A PK fertilizer comprising, as constituents, conditioned sewage sludge and papermaking sludge, the fertilizer being in the form of dried granules having a moisture content of 5 to 10 percent by mass, the mass fraction of the papermaking sludge in the PK fertilizer being higher than the fraction of sewage sludge in the PK fertilizer and the fraction of papermaking sludge in the PK fertilizer being 50 to 60 percent by mass and having a moisture content of 5 to 10 percent by mass.

2. The PK fertilizer according to claim 1, wherein the proportion of sewage sludge in the PK fertilizer adds up to about 81 percent by mass with the proportion of papermaking sludge in the PK fertilizer, and the proportion of nutrients added to the sewage sludge and the papermaking sludge in the PK fertilizer is about 19 percent by mass.

3. The PK fertilizer according to any one of claims 1 to 3, wherein the content of potassium as K₂O is predetermined in a range of 0 to 15 percent by mass and/or the content of phosphorus as P₂O₅ is predetermined in a range of 2 to 12 percent by mass.

4. The PK fertilizer according to any one of claims 1 to 4, wherein the pH of the aqueous eluate of the PK fertilizer is predetermined in a range of 6 to 8.

5. A method for producing an organic-mineral phosphorus-potassium phosphorus fertilizer from sewage sludge and papermaking sludge, comprising mixing the sewage sludge and the papermaking sludge, wherein the percentage by mass of the papermaking sludge in the PK fertilizer is selected to be higher than the percentage by mass of the sewage sludge in the PK fertilizer and the percentage by mass of the papermaking sludge in the PK fertilizer is adjusted to 50 to 60 percent by mass and has a moisture content of 5 to 10 percent by mass, wherein the fertilizer is dried to a granulate with a moisture content of 5 to 10 percent by mass.

6. The method according to claim 5, further comprising at least one of the steps:
- Conditioning of the sewage sludge,
- Conditioning of the papermaking sludge.

7. The method according to claim 6, wherein the conditioning of the sewage sludge comprises at least one of the following steps:
- a crushing of the sewage sludge,
- an addition of phosphoric acid and/or potassium carbonate,
- a mixing,
- a drying,
- grinding to a predetermined grain size.

8. The method according to claim 6 or 7, wherein the conditioning of the papermaking sludge at room temperature comprises the following steps:
- a drying,
- an oxidative treatment,
- an addition of phosphoric acid,
- a mixing.

9. The method according to any one of claims 6 to 8, wherein the mixing of the sewage sludge and the papermaking sludge comprises the following steps:
- a homogenization,
- spraying with demineralised water to form a moist granulate,
- a drying of the moist granulate.

10. The method according to claim 9, wherein acid is added after homogenization.

11. The method according to claim 10, wherein the acid is selected from the group comprising formic acid and phosphoric acid.

## Revendications

1. Un engrais PK comprenant, comme constituants, des boues d'épuration conditionnées et un matériau de captage du papier, l'engrais étant présent sous forme de granulés séchés ayant une teneur en humidité de 5 à 10 percent en masse, la fraction massique du matériau de captage du papier dans l'engrais PK étant supérieure à la fraction des boues d'épuration dans l'engrais PK, et la fraction du matériau de captage du papier dans l'engrais PK étant de 50 à 60 percent en masse et ayant une teneur en humidité de 5 à 10 percent en masse.

2. L'engrais PK selon la revendication 1, dans lequel la proportion de boues d'épuration dans l'engrais PK s'élève à environ 81 percent en masse avec la proportion de matériau de captage du papier emprisonné dans l'engrais PK, et la proportion d'éléments nutritifs ajoutés aux boues d'épuration et au matériau de captage du papier emprisonné dans l'engrais PK est d'environ 19 percent en masse.

3. L'engrais PK selon l'une quelconque des revendications 1 à 3, dans lequel la teneur en potassium sous forme de K₂O est prédéterminée dans une plage de 0 à 15 percent en masse et/ou la teneur en phosphore sous forme de P₂O₅ est prédéterminée dans une plage de 2 à 12 percent en masse.

4. L'engrais PK selon l'une quelconque des revendications 1 à 4, dans lequel le pH de l'éluat aqueux de l'engrais PK est prédéterminé dans une plage de 6 à 8.

5. Un méthode de production d'un engrais organo-minéral phosphoré-potassique à partir de boues d'épuration et de matériau de captage de papier, comprenant le mélange des boues d'épuration et du matériau de captage de papier, dans lequel la fraction massique du matériau de captage de papier dans l'engrais PK est choisie pour être supérieure à la fraction des boues d'épuration dans l'engrais PK et la fraction du matériau de captage de papier dans l'engrais PK est ajustée à 50 à 60 percent en masse et a une teneur en humidité de 5 à 10 % en masse, dans lequel l'engrais est séché en un granulé ayant une teneur en humidité de 5 à 10 % en masse.

6. La méthode selon la revendication 5, comprenant en outre au moins une des étapes suivantes:
- Conditionnement des boues d'épuration,
- Conditionnement du matériau de capture de papier.

7. Le méthode selon la revendication 6, dans lequel le conditionnement des boues d'épuration comprend au moins une des étapes suivantes:
- un broyage des boues d'épuration,
- un ajout d'acide phosphorique et/ou de carbonate de potassium,
- un mélange,
- un séchage,
- le broyage à une taille de grain prédéterminée.

8. Le méthode selon la revendication 6 ou 7, dans lequel le conditionnement de la matériau de captage de papier à température ambiante comprend les étapes suivantes:
- un séchage,
- un traitement oxydatif,
- un ajout d'acide phosphorique,
- une fusion.

9. Le méthode selon l'une quelconque des revendications 6 à 8, dans lequel le mélange des boues d'épuration et de la matériau de captage de papier comprend les étapes suivantes:
- une homogénéisation,
- en pulvérisant de l'eau déminéralisée pour former un granulé humide,
- un séchage du granulé humide.

10. Le méthode selon la revendication 9, dans lequel un acide est ajouté après homogénéisation.

11. Le méthode selon la revendication 10, dans lequel l'acide est choisi dans le groupe comprenant l'acide formique et l'acide phosphorique.
